# FASCICULE DE BREVET EUROPEEN

(11) **EP 2 691 631 B1**
(45) Date de publication et mention de la délivrance du brevet: **10.01.2018**
(21) Numéro de dépôt: 12704403.0
(22) Date de dépôt: 13.02.2012
(51) Int. Cl.: F02M 26/00, F02M 35/104, F02B 29/04

(54) **DISPOSITIF D'INJECTION DE GAZ D'ECHAPPEMENT RECIRCULES, BOITIER REPARTITEUR ET MODULE D'ALIMENTATION COMPRENANT LEDIT DISPOSITIF**
VORRICHTUNG ZUM EINSPRITZEN VON RÜCKGEFÜHRTEN ABGASEN, VERTEILERKASTEN UND VERSORGUNGSMODUL MIT DER VORRICHTUNG
DEVICE FOR THE INJECTION OF RECIRCULATED EXHAUST GASES, DISTRIBUTION BOX AND SUPPLY MODULE COMPRISING SAID DEVICE

(30) Priorité: 31.03.2011 FR 1152697
(43) Date de publication de la demande: 05.02.2014
(73) Titulaire: Valeo Systemes Thermiques, 78320 Le Mesnil Saint Denis (FR)
(72) Inventeur: DE PELSEMAEKER, Georges, F-78125 Poigny-la-Foret (FR); GALLAND, Jean-Pierre, F-78690 Les Essarts-le-Roi (FR); ODILLARD, Laurent, F-72390 Le Luart (FR)
(74) Mandataire: Metz, Gaëlle
(86) Numéro de dépôt international: PCT/EP2012/052387
(87) Numéro de publication internationale: WO 2012/130513

(56) Documents cités:
- EP-A1- 2 169 208
- EP-A2- 1 122 421
- EP-A2- 1 870 591
- WO-A1-2008/116568
- WO-A1-2011/104118
- DE-A1- 3 916 466
- DE-A1- 19 837 623
- FR-A1- 2 879 262

## Description

L'invention concerne un module d'alimentation en gaz d'admission d'un moteur, comprenant un dispositif d'injection de gaz d'échappement recirculés. Un module d'alimentation en gaz d'admission pour moteur de véhicule permet de fournir un mélange, appelé gaz d'admission, comprenant de l'air, pour le fonctionnement du moteur.

Un tel module d'alimentation en gaz d'admission comprend un échangeur de chaleur permettant de refroidir l'air et un boîtier répartiteur permettant de collecter l'air refroidi et de le répartir vers les cylindres du moteur.

On connaît des modules d'alimentation en gaz d'admission comprenant en outre une vanne qui permet l'injection d'une partie des gaz d'échappement issus du moteur, appelés gaz d'échappement recirculés, dans le boîtier répartiteur.

Un tel boîtier répartiteur permet ainsi de répartir vers les cylindres du moteur un mélange d'air refroidi provenant de l'échangeur de chaleur et de gaz d'échappement recirculés provenant de la vanne.

Dans ce but, le boîtier répartiteur comprend une cavité définissant un espace dans lequel se mélange l'air refroidi provenant de l'échangeur de chaleur et les gaz d'échappement recirculés provenant de la vanne.

Afin d'injecter les gaz d'échappement recirculés dans cet espace, un tel boîtier répartiteur comporte un canal d'injection de forme substantiellement cylindrique et percé d'une pluralité d'orifices d'injection, ou injecteurs.

On connaît un boîtier répartiteur dont les orifices d'injection ont tous le même diamètre et sont disposés linéairement le long du canal d'injection en vis-à-vis des cylindres du moteur, l'admission du gaz dans le canal d'injection se faisant, via la vanne, par l'une des extrémités du canal d'injection.

Il a été constaté que, dans un tel boîtier répartiteur, au fur et à mesure que les gaz d'échappement recirculés avancent dans le canal d'injection, la pression statique et donc le débit d'injection des gaz d'échappement recirculés diminue pour chaque cylindre successif, ce qui rend les débits d'injection et donc les taux de recyclage et les températures des gaz inhomogènes entre les cylindres. De plus, ceci peut provoquer l'obstruction, par des particules contenues dans les gaz d'échappement recirculés, de certains des orifices d'injection. Le document WO2008/116568A1 décrit un module d'alimentation en gaz d'admission d'un moteur de véhicule comprenant un dispositif d'injection de gaz d'échappement avec des orifices ayant des sections différentes. L'invention a pour but de remédier à au moins une partie de ces inconvénients et concerne un module d'alimentation en gaz d'admission d'un moteur de véhicule selon la revendication 1. On peut de la sorte adapter la géométrie des orifices de façon à disposer d'une pression statique sensiblement constante au droit de chacun.

Selon une caractéristique de l'invention, le dispositif d'injection est un canal d'injection et les orifices d'injection sont configurés, le long du canal d'injection, de sorte que leurs sections et/ou les hauteurs respectives induisent un débit d'injection des gaz d'échappement recirculés substantiellement égal pour chaque orifice d'injection. Ceci permet d'homogénéiser les taux de recyclage et les températures des gaz d'échappement recirculés entre les cylindres du moteur. Un tel débit d'injection permet en outre d'éviter l'obstruction des orifices.

De préférence, la hauteur de chaque orifice d'injection est constante et les sections d'au moins deux des orifices d'injection sont différentes.

Selon une autre caractéristique de l'invention, la section de chaque orifice d'injection est constante et les hauteurs d'au moins deux des orifices d'injection sont différentes.

Selon un aspect de l'invention, le dispositif est configuré pour que les gaz d'échappement recirculés circulent dans ledit canal depuis au moins une entrée, la section desdits orifices décroissant depuis ladite entrée et/ou la hauteur desdits orifices croissant depuis ladite entrée.

Selon une caractéristique de l'invention, le rapport entre la plus grande surface et la plus petite surface de section des orifices d'injection est comprise entre 1,4 et 2,25.

De préférence, les orifices d'injection sont de section circulaire et leurs diamètres respectifs sont compris entre 8 et 15 mm.

Avantageusement, le rapport entre les diamètres des orifices d'injection et le diamètre du canal d'injection est compris entre 0,1 et 0,4.

De manière préférée, le nombre d'orifices d'injection est destiné à être égal au nombre de cylindres du moteur ou à un multiple du nombre de cylindres du moteur. Un tel nombre d'orifices permet d'injecter les gaz d'échappement recirculés de manière substantiellement égale entre tous les cylindres du moteur.

D'autres caractéristiques et avantages de l'invention apparaîtront lors de la description qui suit faite en regard des figures annexées données à titre d'exemples non limitatifs. Des références identiques sont données à des objets semblables.
La figure 1 est une vue éclatée, en perspective, d'un module d'alimentation en gaz d'admission d'un moteur de véhicule, selon l'invention.
La figure 2 illustre, en perspective, le module d'alimentation de la figure 1, assemblé.
La figure 3 est une vue, en perspective, d'un boîtier répartiteur d'un module d'alimentation en gaz d'admission, selon l'invention, illustré en coupe.
La figure 4a représente en perspective un boîtier répartiteur de module d'alimentation en gaz d'admission, selon l'invention.
La figure 4b est une vue partielle en perspective d'un boîtier répartiteur de module d'alimentation en gaz d'admission, selon l'invention, illustré en coupe de façon à rendre visible l'intérieur de son canal d'injection.
La figure 4c est une vue partielle d'une culasse d'un moteur de véhicule, sur laquelle le boîtier de la figure 4a est destiné à être monté.
La figure 5 est une vue partielle de dessous d'un canal d'injection d'un boîtier répartiteur selon l'invention, illustré en coupe afin de rendre visible ledit canal.

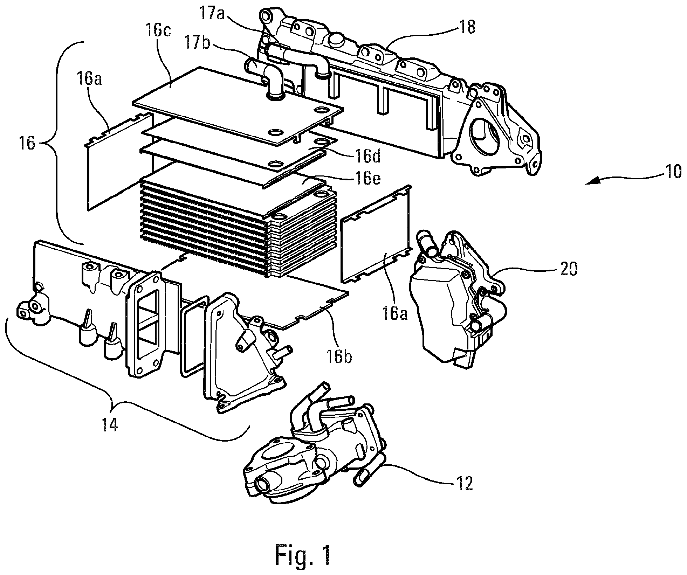

On a représenté aux figures 1 à 5 différents éléments d'un module d'alimentation en gaz d'admission d'un moteur de véhicule.

Le module d'alimentation en gaz d'admission 10 d'un moteur de véhicule illustré par la figure 1 comprend un boîtier collecteur 14 alimentant un échangeur de chaleur 16 avec un fluide, par exemple de l'air d'un circuit de suralimentation du moteur. Ledit module pourra aussi comprendre une vanne 12 servant à contrôler le débit de fluide.

L'échangeur de chaleur 16 comprend, par exemple, des parois latérales 16a, un paroi inférieure 16b et une paroi supérieure 16c entre lesquelles se superposent des plaques 16d et des intercalaires internes 16e. La paroi supérieure 16c comprend des tubulures d'entrée/sortie 17a, 17b d'un liquide de refroidissement du fluide. Les plaques 16d sont assemblées par paire pour former entre deux plaques d'une même paire des premiers canaux de circulation du fluide de refroidissement et entre deux plaques situées en vis-à-vis de deux paires voisines des canaux de circulation du fluide, munis desdits intercalaires 16e. Le fluide circule ainsi à travers la vanne 12, puis le boîtier collecteur 14 et enfin à travers les intercalaires internes 16e.

Le module d'alimentation en gaz d'admission 10 comprend un boîtier répartiteur 18 permettant de répartir ou guider le fluide, qui a été refroidi par l'échangeur de chaleur 16, vers les cylindres du moteur du véhicule.

Le module d'alimentation en gaz d'admission 10 illustré comprend aussi une vanne 20 permettant l'introduction d'une partie des gaz d'échappement issus du moteur, appelés gaz d'échappement recirculés, dans le boîtier répartiteur 18. Ladite vanne 20 est dite vanne EGR.

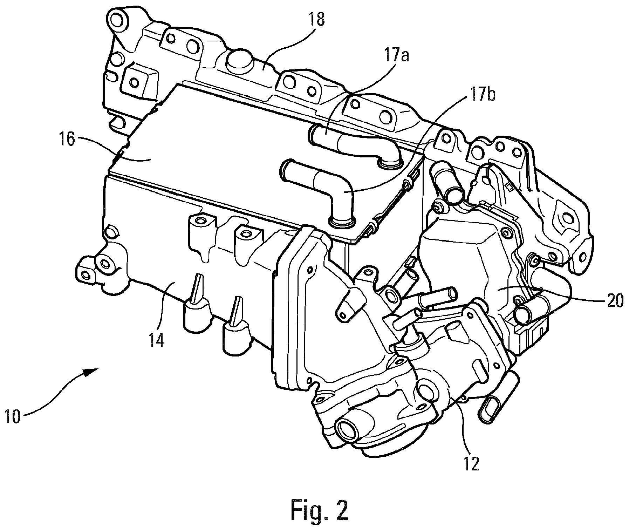

La figure 2 illustre le module d'alimentation en gaz d'admission 10 de la figure 1 assemblé. La vanne 12 servant à contrôler le débit de fluide alimentant le module est ainsi montée sur le boîtier collecteur 14 de fluide. Le boîtier collecteur 14 est monté sur l'une des deux faces sans paroi de l'échangeur de chaleur 16 afin de permettre le passage du fluide vers l'échangeur. Le boîtier répartiteur 18 est monté sur l'autre face sans paroi de l'échangeur de chaleur 16 afin de collecter le fluide refroidi par l'échangeur de chaleur 16, de le mélanger aux gaz d'échappement recirculés et de répartir le mélange ainsi obtenu vers les cylindres du moteur. La vanne EGR 20 est montée sur le boîtier répartiteur 18.

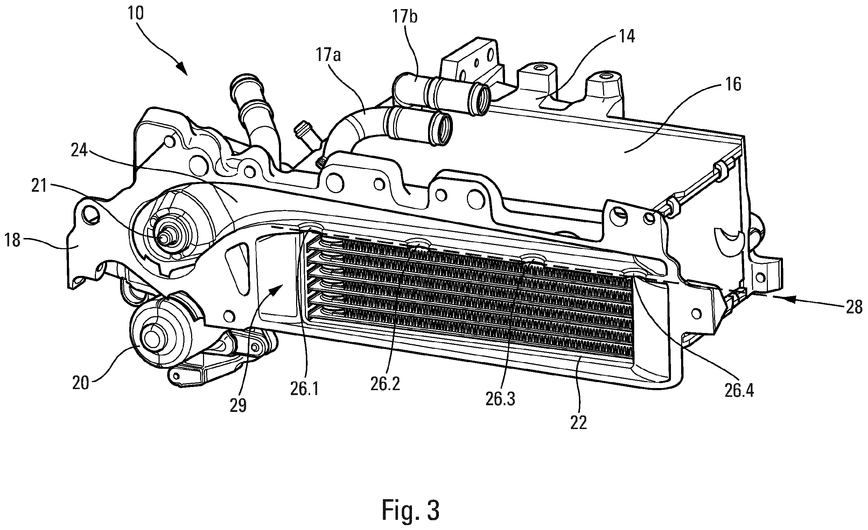

Comme illustré par la figure 3, la vanne EGR 20 permet un passage des gaz d'échappement recirculés par un orifice d'entrée 21 d'un dispositif d'injection 24 du boîtier répartiteur 18. Un tel dispositif d'injection 24 selon l'invention comprend une pluralité d'orifices d'injection, ou injecteurs 26.1, 26.2, 26.3, 26.4. Le dispositif illustré présente la forme d'un canal. Toutefois, toute forme équivalente pourrait convenir à l'homme du métier afin de réaliser la présente invention.

De préférence, mais de manière non limitative, les orifices d'injection 26.1, 26.2, 26.3, 26.4, sont disposés linéairement le long d'un axe 28 les traversant en leurs centres respectifs. Ils sont disposés de façon à se trouver en vis-à-vis des orifices d'alimentation en gaz d'admission du moteur. En variante, chaque orifice est dédoublé.

Sur l'illustration de la figure 3, le canal d'injection 24 est de forme allongée et bouché à l'extrémité opposée à l'entrée des gaz d'échappement recirculés par l'orifice d'entrée 21.

Le boîtier répartiteur 18 comprend une cavité définissant, avec l'ouverture 22 à la jonction avec l'échangeur de chaleur 16, un espace 29 dans lequel se mélange l'air refroidi provenant de l'échangeur de chaleur 16 et les gaz d'échappement recirculés provenant, via le canal d'injection 24 du boîtier répartiteur 18, de la vanne EGR 20. Le canal 24 est, notamment, issu de matière d'un corps du boîtier 18, définissant ledit espace 29.

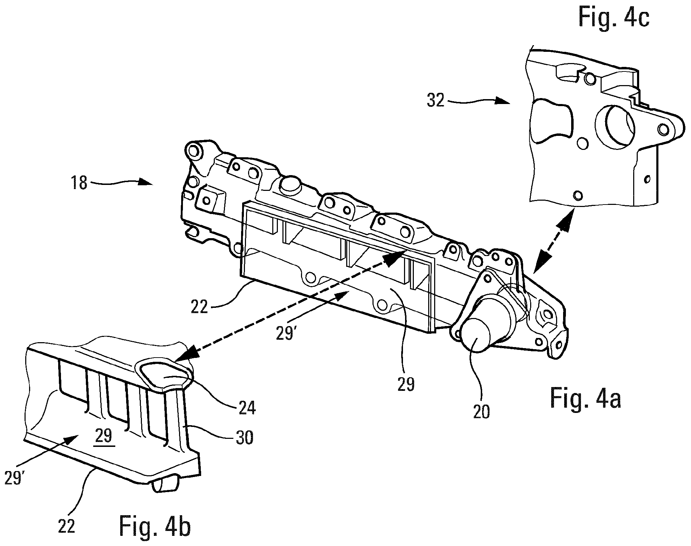

La figure 4a illustre l'espace 29 défini dans le boîtier répartiteur 18 par l'ouverture 22 à la jonction avec l'échangeur de chaleur 16. La flèche 29' indique le sens du flux de fluide refroidi sortant de l'échangeur de chaleur 16 par l'ouverture 22 et entrant dans l'espace 29, limité par l'ouverture 22 et la cavité ménagée dans le boîtier répartiteur 18. Sur cette figure 4a, dans un souci de clarté, la vanne EGR 20 n'est représentée que partiellement.

Le canal d'injection 24, illustré par la figure 4b, du boîtier répartiteur 18 permet d'injecter les gaz d'échappement recirculés provenant de la vanne EGR 20 dans l'espace 29 via les orifices d'injection 26.1, 26.2, 26.3, 26.4, débouchant substantiellement perpendiculairement au flux de fluide refroidi venant de l'échangeur de chaleur 16.

Le mélange, obtenu dans l'espace 29, entre le fluide refroidi provenant de l'échangeur de chaleur 16 et les gaz d'échappement recirculés injectés est ensuite réparti ou guidé par des moyens de guidage 30 du boîtier répartiteur 18 vers les orifices d'alimentation en gaz d'admission des cylindres du moteur via sa culasse 32.

Comme illustré par la figure 4c, le boîtier répartiteur 18 et la culasse 32 du moteur sont destinés à être montés l'un sur l'autre.

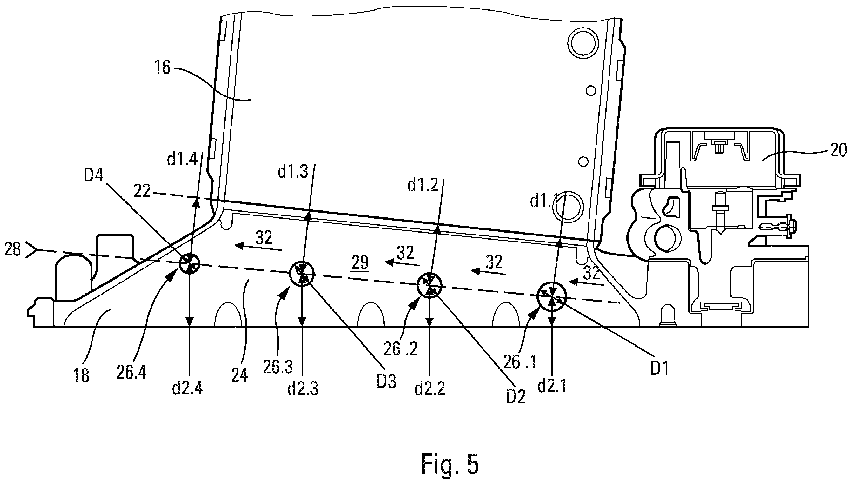

La figure 5 illustre un canal d'injection 24 comprenant ici quatre orifices 26.1, 26.2, 26.3 et 26.4 disposés linéairement le long d'un axe 28 traversant le centre de chaque orifice. Ils pourront être plus ou moins nombreux. En particulier, comme déjà évoqué, ils pourront être groupés par paire, chaque paire étant disposée de façon à se trouver en vis-à-vis des orifices d'alimentation en gaz d'admission prévus dans la culasse du moteur.

Les gaz d'échappement recirculés provenant de la vanne 20 via l'orifice d'entrée 21 circulent dans le canal d'injection 24 substantiellement dans le sens des flèches 32 en direction des orifices 26.1, 26.2, 26.3 et 26.4.

Selon l'invention, on fait varier les caractéristiques géométriques des orifices afin de s'adapter à la pression statique à l'endroit des orifices.

Dans une forme de réalisation du boîtier répartiteur 18 selon l'invention, à épaisseur de matière constante du boîtier répartiteur 18 entre le canal d'injection 24 et l'espace 29 (i.e. à hauteur d'orifice constante), la surface, et par équivalence, le diamètre D1, D2, D3, D4 de respectivement chaque orifice 26.1, 26.2, 26.3, 26.4 est configuré de sorte que la pression statique des gaz d'échappement recirculés, et donc le débit des gaz d'échappement recirculés, soit substantiellement constant d'un orifice à l'autre.

Dans une autre forme de réalisation du boîtier répartiteur 18 selon l'invention, les diamètres D1, D2, D3, D4 peuvent être constants et seule l'épaisseur de matière du boîtier répartiteur 18 entre le canal d'injection 24 et l'espace 29, c'est-à-dire la hauteur de chaque orifice, peut varier afin de rendre la pression statique des gaz d'échappement recirculés substantiellement constante et donc le débit des gaz d'échappement recirculés substantiellement constant.

Dans une autre forme de réalisation du boîtier répartiteur 18 selon l'invention, à la fois l'épaisseur de matière du boîtier répartiteur 18 entre le canal d'injection 24 et l'espace 29, c'est-à-dire la hauteur de chaque orifice, et les diamètres D1, D2, D3, D4 peuvent varier d'un orifice à l'autre en étant configurés de sorte que la pression statique des gaz d'échappement recirculés soit substantiellement constante et donc que le débit des gaz d'échappement recirculés soit substantiellement constant. Entre d'autres termes, à la fois les diamètres et les hauteurs des orifices peuvent être différents d'un orifice à un autre.

On notera que les orifices d'injection illustrés sont de forme circulaire mais pourraient très bien être rectangulaires ou de toute autre forme, telle que par exemple une fente. Par ailleurs, dans le cas de groupement d'orifices par paire, comme évoqué plus haut, les orifices d'une même paire pourront être identiques, seule changeant les caractéristiques géométriques des orifices de paires différentes.

Ainsi, dans le boîtier répartiteur 18 selon l'invention, la hauteur (épaisseur de matière) et la surface, de chaque orifice ainsi que, optionnellement, l'espacement entre deux orifices successifs, sont dimensionnées pour que le débit d'injection des gaz d'échappement recirculés dans l'espace 29 soit ainsi substantiellement constant.

Les diamètres D1, D2, D3, D4 respectivement des orifices 26.1, 26.2, 26.3, 26.4 peuvent ainsi être compris entre 8 et 20 mm. Ils sont, notamment, décroissants à partir de l'entrée 21 du canal 24. Quant au canal d'injection, il présente une section comprise, par exemple, entre 20 à 28 mm.

Le ratio entre la surface de l'orifice d'injection le plus grand et la surface de l'orifice d'injection le plus petit est compris, par exemple, entre 1,4 et 2,25. Et le ratio de leur diamètre par rapport au diamètre du conduit de distribution est compris, par exemple, entre 0,1 et 0,4.

La distance d1.1, d1.2, d1.3, d1.4 représente la distance entre le centre respectivement des orifices 26.1, 26.2, 26.3, 26.4 et l'ouverture. En d'autres termes, d1.1, d1.2, d1.3, d1.4 est la distance qui sépare le plan comprenant l'ouverture 22 et le plan comprenant l'axe 28 pour chaque orifice 26.1, 26.2, 26.3, 26.4. Cette distance peut être comprise entre, par exemple, 32 et 36 mm. Elle est, selon l'invention, croissante d'un orifice à l'autre à partir de l'entrée 21 du canal 24.

La distance d2.1, d2.2, d2.3, d2.4 représente la distance entre le centre des orifices 26.1, 26.2, 26.3, 26.4 et culasse 32. Cette distance peut être comprise entre, par exemple, 15 et 33 mm. Elle est, selon l'invention, croissante d'un orifice à l'autre à partir de l'entrée 21 du canal 24.

On peut de la sorte réduire fortement les risques d'explosion de l'échangeur de chaleur 16 induits par la haute pression des gaz d'échappement recirculés venant de la vanne 20 et optimiser le mélange entre le fluide refroidi provenant de l'échangeur de chaleur 16 et les gaz d'échappement recirculés injectés dans l'espace 29 par les orifices 26.1, 26.2, 26.3, 26.4.

Comme illustré, l'axe 28 passant par le centre de chaque orifice 26.1, 26.2, 26.3, 26.4 forme, par exemple, une bissectrice de l'angle formé par les plans de l'ouverture 22 sur l'échangeur et de l'ouverture 32 sur la culasse.

Ainsi, les distances d1.1 + d2.1, d1.2 + d2.2, d1.3 + d2.3, d1.4 + d2.4 entre l'ouverture 22 et la culasse 32 peuvent être comprises entre, par exemple, 47 et 69 mm, permettant ainsi d'éviter les retours de flamme des cylindres vers l'échangeur de chaleur 16. Elles sont croissantes d'un orifice à l'autre à partir de l'entrée 21 du canal 24.

## Revendications

1. Modula d'alimentation en gaz d'admission d'un moteur de véhicule, notamment diesel, ledit module (10) comprenant un échangeur de chaleur (16) pour lesdits gaz d'admission et un boîtier répartiteur de gaz (18) comprenant un dispositif d'injection comprenant un canal d'injection (24) et un espace (29) défini par une ouverture (22) à la jonction avec l'échangeur de chaleur (16), ledit espace (29) étant apte à autoriser le mélange d'un flux d'air reçu, notamment de l'échangeur de chaleur (16), et des gaz d'échappement recirculés injectés par ledit dispositif d'injection dans ledit espace (29), le module étant configuré pour permettre l'injection des gaz d'échappement recirculés dans lesdits gaz d'admission en aval de l'échangeur (16) selon le sens d'écoulement des gaz d'admission dans le module (10), ledit dispositif d'injection comprenant une pluralité d'orifices d'injection (26.1, 26.2, 26.3, 26.4), ménagés dans une portion de matière dudit dispositif d'injection, chaque orifice d'injection (26.1, 26.2, 26.3, 26.4) présentant une section et une hauteur dans ladite épaisseur de matière, le dispositif étant configuré pour que les gaz d'échappement recirculés circulent dans ledit canal d'injection (24) depuis au moins une entrée (21), la section desdits orifices étant décroissante depuis ladite entrée (21) et/ou la hauteur desdits orifices étant croissante depuis ladite entrée (21), **caractérisé en ce qu'**une distance (d1.1, d1.2, d1.3, d1.4) entre l'ouverture (22) à la jonction avec l'échangeur (16) et le centre respectivement des orifices (26.1, 26.2, 26.3, 26.4) et une distance (d2.1, d2.2, d2.3, d2.4) entre le centre des orifices (26.1, 26.2, 26.3, 26.4) et une culasse d'un moteur de véhicule, sur laquelle le boîtier répartiteur (18) est destiné à être monté, sont croissantes d'un orifice à l'autre à partir de l'entrée (21) du canal (24).

2. Module d'alimentation en gaz d'admission d'un moteur de véhicule selon la revendication 1, ledit dispositif d'injection étant un canal d'injection (24) et les orifices d'injection (26.1, 26.2, 26.3, 26.4) étant configurés, le long dudit canal d'injection (24), de sorte que leurs sections et/ou leurs hauteurs respectives induisent un débit d'injection des gaz d'échappement recirculés substantiellement égal pour chaque orifice d'injection (26.1, 26.2, 26.3, 26.4).

3. Module d'alimentation en gaz d'admission d'un moteur de véhicule selon l'une quelconque des revendications précédentes, dans lequel la hauteur de chaque orifice d'injection (26.1, 26.2, 26.3, 26.4) est constante et les sections d'au moins deux des orifices d'injection (26.1, 26.2, 26.3, 26.4) sont différentes.

4. Module d'alimentation en gaz d'admission d'un moteur de véhicule selon l'une quelconque des revendications 1 à 2, dans lequel la section de chaque orifice d'Injection (26.1, 26.2, 26.3, 26.4) est constante et les hauteurs d'au moins deux des orifices d'injection (26.1, 26.2, 26.3, 26.4) sont différentes,

5. Module d'alimentation en gaz d'admission d'un moteur de véhicule selon l'une quelconque des revendications précédentes, dans lequel le rapport entre la plus grande surface et la plus petite surface de section des orifices d'injection (26.1, 26.2, 26.3, 26.4) est comprise entre 1,4 et 2,25.

6. Module d'alimentation en gaz d'admission d'un moteur de véhicule selon l'une quelconque des revendications précédentes, dans lequel les orifices d'injection (26.1, 26.2, 26.3, 26.4) sont de section circulaire et leurs diamètres respectifs sont compris entre 8 et 15 mm.

7. Module d'alimentation en gaz d'admission d'un moteur de véhicule selon la revendication 6 en dépendance de la revendication 2, dans lequel le rapport entre les diamètres des orifices d'injection (26.1, 26.2, 26.3, 26.4) et le diamètre du canal d'injection (24) est compris entre 0,1 et 0,4.

8. Module d'alimentation en gaz d'admission d'un moteur de véhicule selon l'une quelconque des revendications précédentes, dans lequel le nombre d'orifices d'injection (26.1, 26.2, 26.3, 26.4) est destinée à être égal au nombre de cylindres du moteur ou à un multiple du nombre de cylindres du moteur,

## Patentansprüche

1. Modul zur Zufuhr von Einlassgasen zu einem Fahrzeugmotor, insbesondere Fahrzeugdieselmotor, wobei das Modul (10) einen Wärmetauscher (16) für die Einlassgase und einen Gasverteilerkasten (18) umfasst, der eine Einspritzvorrichtung, die einen Einspritzkanal (24) umfasst, und einen Raum (29), der durch eine Aussparung (22) an der Verbindungsstelle mit dem Wärmetauscher (16) definiert wird, umfasst, wobei der Raum (29) ein Vermischen von einem Luftstrom, der, insbesondere von dem Wärmetauscher (16), empfangen wird, und rückgeführten Abgasen, die von der Einspritzvorrichtung in den Raum (29) eingespritzt werden, gestatten kann, wobei das Modul dazu konfiguriert ist, das Einspritzen von rückgeführten Abgasen in die Einlassgase stromabwärts des Wärmetauschers (16) gemäß der Strömungsrichtung der Einlassgase in dem Modul (10) zu gestatten, wobei die Einspritzvorrichtung mehrere Einspritzöffnungen (26.1, 26.2, 26.3, 26.4) umfasst, die in einem Materialabschnitt der Einspritzvorrichtung ausgebildet sind, wobei jede Einspritzöffnung (26.1, 26.2, 26.3, 26.4) einen Querschnitt und eine Höhe in der Materialdicke aufweist, wobei die Vorrichtung so konfiguriert ist, dass die rückgeführten Abgase in dem Einspritzkanal (24) von mindestens einem Einlass (21) zirkulieren, wobei der Querschnitt der Öffnungen von dem Einlass (21) aus abnimmt und/oder die Höhe der Öffnungen von dem Einlass (21) aus zunimmt, **dadurch gekennzeichnet, dass** ein Abstand (d1.1, d1.2, d1.3, d1.4) zwischen der Aussparung (22) an der Verbindungsstelle mit dem Wärmetauscher (16) und dem jeweiligen Mittelpunkt der Öffnungen (26.1, 26.2, 26.3, 26.4) und ein Abstand (d2.1, d2.2, d2.3, d2.4) zwischen dem Mittelpunkt der Öffnungen (26.1, 26.2, 26.3, 26.4) und einem Zylinderkopf eines Fahrzeugmotors, an dem der Verteilerkasten (18) befestigt werden soll, von einer Öffnung zur anderen von dem Einlass (21) des Kanals (24) aus zunehmen.

2. Modul zur Zufuhr von Einlassgasen zu einem Fahrzeugmotor nach Anspruch 1, wobei die Einspritzvorrichtung ein Einspritzkanal (24) ist und die Einspritzöffnungen (26.1, 26.2, 26.3, 26.4) entlang dem Einspritzkanal (24) so konfiguriert sind, dass ihre jeweiligen Querschnitte und/oder ihre jeweiligen Höhen eine Einspritzrate von rückgeführten Abgasen hervorrufen, die für jede Einspritzöffnung (26.1, 26.2, 26.3, 26.4) im Wesentlichen gleich ist.

3. Modul zur Zufuhr von Einlassgasen zu einem Fahrzeugmotor nach einem der vorhergehenden Ansprüche, wobei die Höhe jeder Einspritzöffnung (26.1, 26.2, 26.3, 26.4) konstant ist und die Querschnitte von mindestens zwei der Einspritzöffnungen (26.1, 26.2, 26.3, 26.4) verschieden sind.

4. Modul zur Zufuhr von Einlassgasen zu einem Fahrzeugmotor nach einem der Ansprüche 1-2, wobei der Querschnitt jeder Einspritzöffnung (26.1, 26.2, 26.3, 26.4) konstant ist und die Höhen von mindestens zwei der Einspritzöffnungen (26.1, 26.2, 26.3, 26.4) verschieden sind.

5. Modul zur Zufuhr von Einlassgasen zu einem Fahrzeugmotor nach einem der vorhergehenden Ansprüche, wobei das Verhältnis zwischen der größten Querschnittsfläche und der kleinsten Querschnittsfläche der Einspritzöffnungen (26.1, 26.2, 26.3, 26.4) zwischen 1,4 und 2,25 liegt.

6. Modul zur Zufuhr von Einlassgasen zu einem Fahrzeugmotor nach einem der vorhergehenden Ansprüche, wobei die Einspritzöffnungen (26.1, 26.2, 26.3, 26.4) einen kreisförmigen Querschnitt aufweisen und ihre jeweiligen Durchmesser zwischen 8 und 15 mm betragen.

7. Modul zur Zufuhr von Einlassgasen zu einem Fahrzeugmotor nach Anspruch 6 in Abhängigkeit von Anspruch 2, wobei das Verhältnis zwischen den Durchmessern der Einspritzöffnungen (26.1, 26.2, 26.3, 26.4) und dem Durchmesser des Einspritzkanals (24) zwischen 0,1 und 0,4 beträgt.

8. Modul zur Zufuhr von Einlassgasen zu einem Fahrzeugmotor nach einem der vorhergehenden Ansprüche, wobei die Anzahl an Einspritzöffnungen (26.1, 26.2, 26.3, 26.4) gleich der Anzahl an Motorzylindern oder ein Vielfaches der Anzahl an Motorzylindern sein soll.

## Claims

1. Inlet gas supply module of a vehicle engine, in particular a diesel engine, the said module (10) comprising a heat exchanger (16) for the said inlet gases and a gas distribution box (18) comprising an injection device comprising an injection channel (24) and a space (29) defined by an orifice (22) at the junction with the heat exchanger (16), the said space (29) being capable of allowing the mixture of a flow of air received in particular from the heat exchanger (16), and of the recirculated exhaust gases injected by the said injection device into the said space (29), the module being configured in order to permit the injection of the recirculated exhaust gases into the said inlet gases downstream of the exchanger (16) according to the direction of flow of the inlet gases inside the module (10), the said injection device comprising a plurality of injection ports (26.1, 26.2, 26.3, 26.4), provided in a portion of the material of the said injection device, each injection port (26.1, 26.2, 26.3, 26.4) having a cross section and a height in the said thickness of the material, the device being configured in such a way that the recirculated exhaust gases circulate inside the said injection channel (24) from at least one inlet (21), the cross section of the said ports decreasing from the said inlet (21) and/or the height of the said ports increasing from the said inlet (21), **characterized in that** a distance (d1.1, d1.2, d1.3, d1.4) between the orifice (22) at the junction with the exchanger (16) and the centre respectively of the ports (26.1, 26.2, 26.3, 26.4) and a distance (d2.1, d2.2, d2.3, d2.4) between the centre of the ports (26.1, 26.2, 26.3, 26.4) and a cylinder head of a vehicle engine, on which the distribution box (18) is intended to be mounted, increase from one port to the other from the inlet (21) of the channel (24).

2. Inlet gas supply module of a vehicle engine according to Claim 1, the said device being an injection channel (24) and the injection ports (26.1, 26.2, 26.3, 26.4) being configured along the said injection channel (24), such that their cross sections and/or their respective heights induce an injection flow of the recirculated exhaust gases that is substantially equal for each injection port (26.1, 26.2, 26.3, 26.4).

3. Inlet gas supply module of a vehicle engine according to either of the preceding claims, in which the height of each injection port (26.1, 26.2, 26.3, 26.4) is constant and the cross sections of at least two of the injection ports (26.1, 26.2, 26.3, 26.4) are different.

4. Inlet gas supply module of a vehicle engine according to either of Claims 1 and 2, in which the cross section of each injection port (26.1, 26.2, 26.3, 26.4) is constant and the heights of at least two of the injection ports (26.1, 26.2, 26.3, 26.4) are different.

5. Inlet gas supply module of a vehicle engine according to any of the preceding claims, in which the relationship between the largest surface and the smallest surface of the cross section of the injection ports (26.1, 26.2, 26.3, 26.4) lies in the range between 1.4 and 2.25.

6. Inlet gas supply module of a vehicle engine according to any of the preceding claims, in which the injection ports (26.1, 26.2, 26.3, 26.4) are of circular cross section and their respective diameters lie in the range between 8 and 15 mm.

7. Inlet gas supply module of a vehicle engine according to Claim 6 where dependent on Claim 2, in which the relationship between the diameters of the injection ports (26.1, 26.2, 26.3, 26.4) and the diameter of the injection channel (24) lies in the range between 0.1 and 0.4.

8. Inlet gas supply module of a vehicle engine according to any of the preceding claims, in which the number of injection ports (26.1, 26.2, 26.3, 26.4) is intended to be equal to the number of cylinders of the engine or to a multiple of the number of cylinders of the engine.
